# EUROPEAN PATENT SPECIFICATION

(11) **EP 0 412 067 B1**
(45) Date of publication and mention of the grant of the patent: **09.03.1994**
(21) Application number: 90830358.9
(22) Date of filing: 31.07.1990
(51) Int. Cl.: B60K 15/00, B60R 16/00, F16L 11/00, F16L 11/12

(54) **A subassembly for the fuel supply to a motor vehicle engine**
Vormontierte Einheit für die Kraftversorgung eines Fahrzeugmotors
Sous-ensemble d'alimentation en carburant de véhicule à moteur

(30) Priority: 04.08.1989 IT 6768289; 23.05.1990 IT 5305590 U
(43) Date of publication of application: 06.02.1991
(73) Proprietor: ERGOM MATERIE PLASTICHE S.p.A, I-10071 Borgaro Torinese (Torino) (IT)
(72) Inventor: Cimminelli, Franco, I-10144 Torino (IT)
(74) Representative: Rambelli, Paolo

(56) References cited:
- EP-A- 224 334
- EP-A- 259 725
- EP-A- 0 338 609
- DE-A- 1 938 128
- FR-A- 2 179 904
- FR-A- 2 533 996
- US-A- 3 151 905

## Description

The present invention relates to an assembly for supporting and housing pipes, electrical cables and the like, particularly for the fuel supply to a motor-vehicle engine.

Current fuel-supply systems include shaped pipes of polyamide arranged on the floor of the vehicle. In order to define the exact path of the pipes (the delivery pipe and the pipe for recycling to the tank), they are preformed in several shaped sections before fitting and these are then assembled and fixed to the body in various ways.

The fitting of the pipes is thus laborious and, in addition, the fuel pipes may sag between their supports and may have a poor resistance to the high temperatures which occur, for example, near the silencer or the exhaust pipe.

French patent application No. FR-A-2179904 describes a system for connection between a fuel tank and an injection engine constituted by a substantially flat, flexible, profiled section comprising tubular portions placed side-by-side and joined together. Whilst it can be fitted quickly, this solution does not provide sufficient safety for mounting under the body since the pipes are not protected.

EP-A-338609 (published 25.10.1989) discloses a tubular duct adapted to be mounted to the body of a motor vehicle, comprising a rather flexible coating which contains a rigid pipe of the fuel-supply system of the vehicle.

FR-A-2533996 relates to a flexible pipe for fluid circuits of vehicles, adapted to join two rigid ducts and having short straight portions and short corrugated portions in succession.

The object of the present invention is to provide an assembly associated with the fuel-supply system of a motor vehicle engine, which does not have the said disadvantages, which is simple and cheap to produce, and which can be installed quickly.

According to the invention, this object is achieved by virtue of the features set forth in the annexed claim 1.

The sheath comprises rigid tubular elements that may be integral with the corrugated portions and, in this case, the assembly is a single component which can be assembled with the other components of a main assembly such as, for example,the fuel-supply system in which the tank has to be connected to the supply pump.

The sheath preferably has a dovetail-shaped lateral rib for resilient snap-engagement in seats provided on the motor vehicle body outside the passenger compartment.

By virtue of these characteristics, the preforming and assembly of the fuel pipes is thus avoided and, moreover, these may be made from materials which are more flexible and less expensive than polyamide. An important advantage results from the installation of the tubular element beneath the body since it avoids the problem of a smell of fuel within the passenger compartment due to its diffusion through the fuel pipes as a result of their porosity. The need for suitable support clips is also eliminated so that the assembly is an extremely quick and easy job for the fitter and can easily be automated.

To advantage, the tubular element is constituted by a rigid sheath of plastics material which prevents any sagging of the fuel pipes or their abrasion due to gravel being thrown up beneath the body by the wheels. The tubular element may be corrugated throughout, thus ensuring greater resistance to impact by stones thrown up by the wheels. In a preferred embodiment, each element has at least two half-shells which are articulated longitudinally and are adapted to be joined together when closed. By virtue of this characteristic, the pipes enclosed in the tubular element can be replaced or checked without the need to remove it from the body of the motor vehicle.

In this embodiment, the assembly also includes saddle elements for supporting the pipes within the tubular element and adapted to be fixed to the motor vehicle body through holes in one of the half-shells, the support elements also acting as supports for the tubular element.

The pipes are thus supported by the support elements so that, when the lower half-shell is opened for the inspection or replacement of one of the pipes, the pipes remain in their predetermined positions.

Further advantages and characteristics of the assembly according to the invention will become clear from the detailed description which follows, purely by way of non-limiting example, with reference to the appended drawings, in which:
Figure 1 is a schematic view of an assembly according to the invention fitted to a motor vehicle.

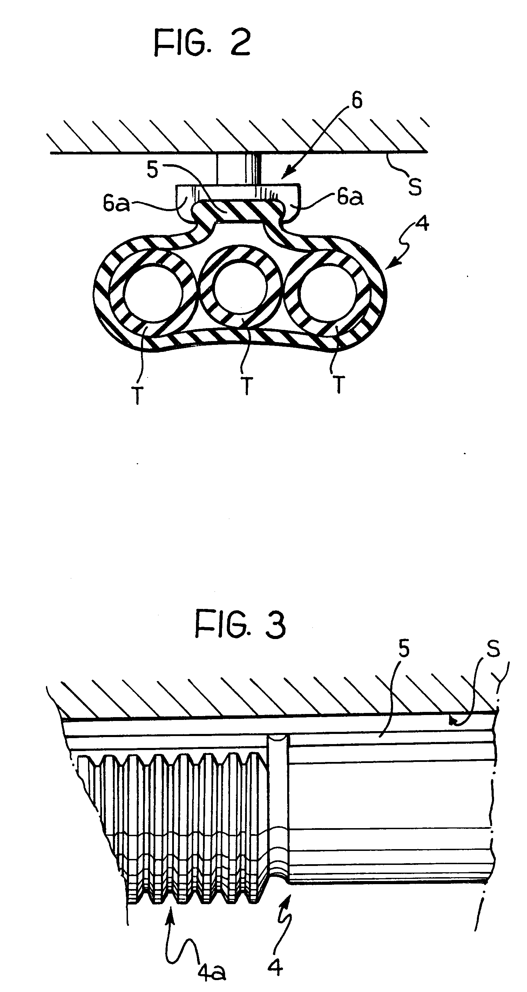

Figure 2 is a section taken on the line II-II of Figure 1,
Figure 3 is a side view taken on the arrow III of Figure 1,
Figure 4 is a cross-section of a tubular element of the sub-assembly according to another embodiment,
Figure 5 is a view similar to Figure 4 and shows a tubular element adapted to be fitted in a recess in the body,
Figure 6 is an exploded perspective view of a detail of Figure 5,
Figure 7 is a view similar to Figure 4 and shows a different system for fixing the tubular element to the body,
Figure 8 is a view similar to Figure 7,
Figure 9 is a view of the tubular element taken on the arrow IX of Figures 7 and 8,
Figure 10 is a detail of Figure 4, showing a variant of the fixing of the tubular element;
Figure 11 is a cross-section of a tubular element according to the invention in correspondence with one of its ends, and
Figure 12 is a section taken on the line XII-XII of Figure 11 with the tubular element in an open configuration.

With reference to the drawings, a motor vehicle body is indicated S and has an internal combustion engine M, an exhaust pipe E and a fuel tank R.

The fuel tank R and the supply to the engine M are connected by means of a fuel delivery pipe T, an excess-fuel return pipe and a breather pipe.

These three pipes are housed in a single sheath 4 of rigid polymeric material which has a flattened, substantially oval shape and is provided with bellows-like corrugated portions 4a in the regions where the sheath has to be bent in order to fit the shape of the body and the arrangement of the various members fixed to the body.

Throughout its length, or along predetermined portions, the sheath 4 has a longitudinal rib 5 with a dovetail-shaped cross-section which can be resiliently snap-engaged with converging tabs 6a of engagement elements 6 welded electrically beneath the body S.

The sheath 4 may also be connected to the body S by conventional systems, for example, with the use of resilient clips.

Moreover, near heat sources, such as the exhaust pipe E or the catalytic silencer, the affected section of the sheath 4 may be made from fireproof material suitably joined to the rest of the sheath so as to ensure its continuity.

During the installation of the pipes T under the body S, the fitter snap-engages the rib 5 of the sheath 4 resiliently in engagement elements 6 already provided on the body S and bends the sheath 4 manually in the corrugated zones 4a.

Although the embodiment described above relates to fuel pipes, the sheath 4 may obviously also be used for supporting and housing electrical cables or air pipes so that the use of clips for holding cables and/or pipes together is superfluous.

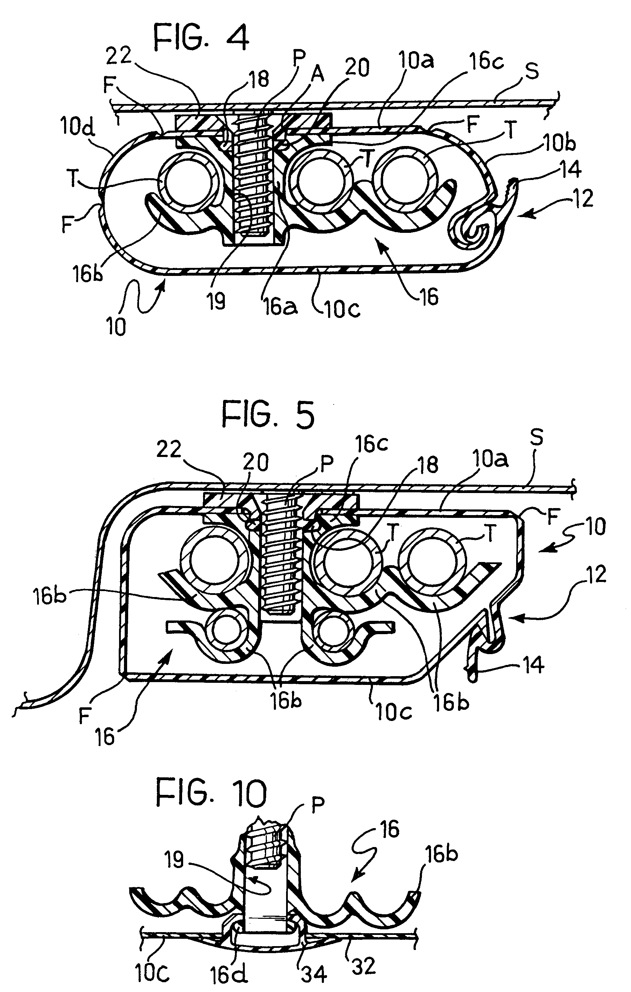

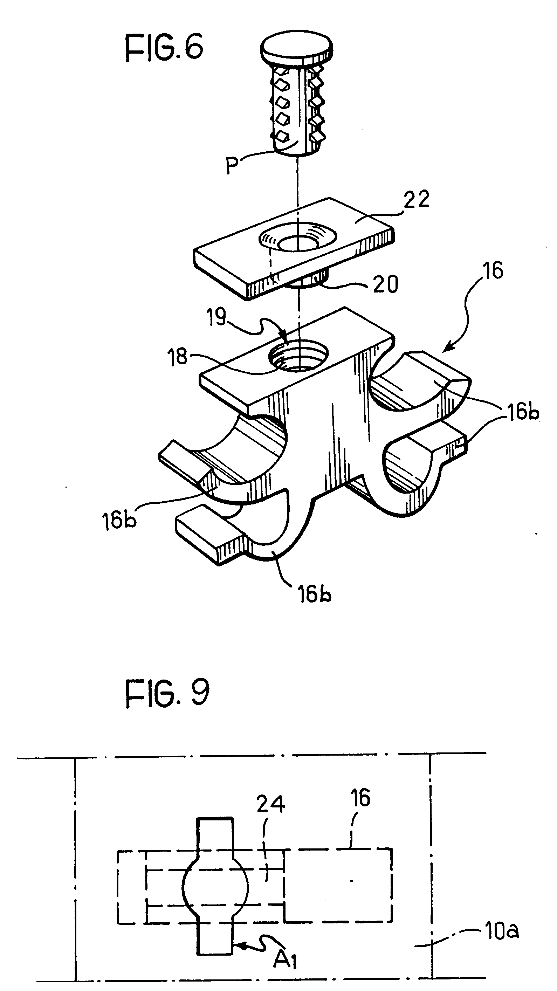

The second embodiment of the invention, shown in Figures 4-12, provides for the use of a hollow profiled section 10 of polymeric material which is adapted to be fixed beneath a motor-vehicle body S and comprises a plurality of substantially rigid longitudinal portions 10a, 10b, 10c and 10d articulated together by film hinges F. The profiled section 10 is closed by a deformable coupling 12 which can be opened by the manual operation of a tongue 14 and is adapted to be resiliently snap-engaged upon closure. The rigid part 10a of the the profiled section 10 which faces the body S has holes A for the passage of flanged fixing pins P welded to the body S.

Saddle-like supports 16 of polymeric material are force-fitted on the pins P with the profiled section 10 in the open configuration, and comprise a shank portion 16a, a plurality of support saddles 16b for pipes T, and a flanged portion 16c which faces an internal wall of the profiled section 10 and is coaxial with an annular seat 18 formed in correspondence with a central hole 19 in the shank portion 16a. A corresponding annular portion 20 of a spacer element 22, interposed between the body S and the part 10a of the profiled section 10 when the sheath is in the installed configuration, is resiliently snap-engaged in the annular seat 18. The wall 10a is thus clamped between the spacer element 22 and the flanged portion 16c of the saddle support 16. As well as supporting the pipes T, the supports 16 are also used for supporting the profiled section 10 itself.

The variant shown in Figure 5 has a profiled section 10 of a slightly different shape and a saddle support 16 which is adapted for a larger number of pipes or cables T. In this embodiment, the shape of the profiled section 10 is designed so that it fits a recess in the body of the motor vehicle.

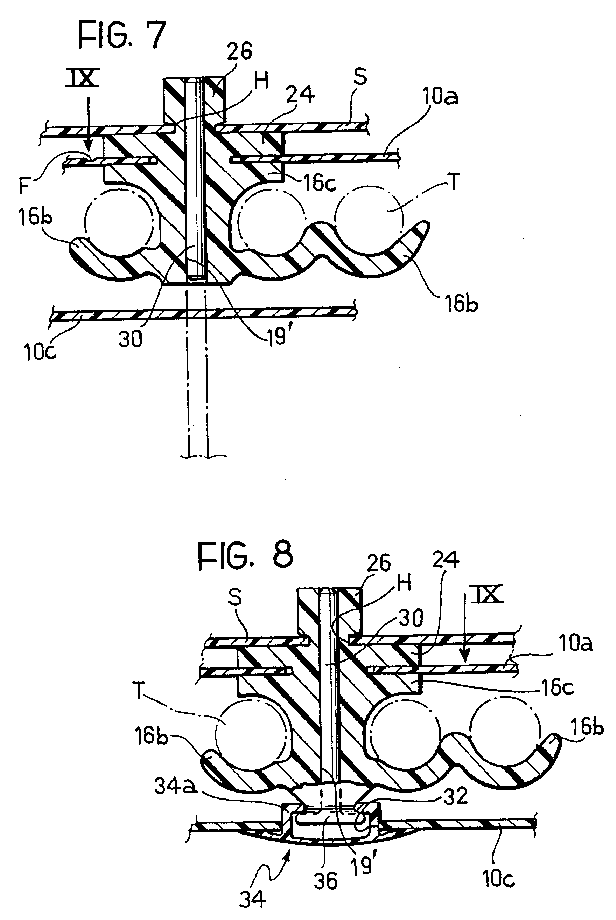

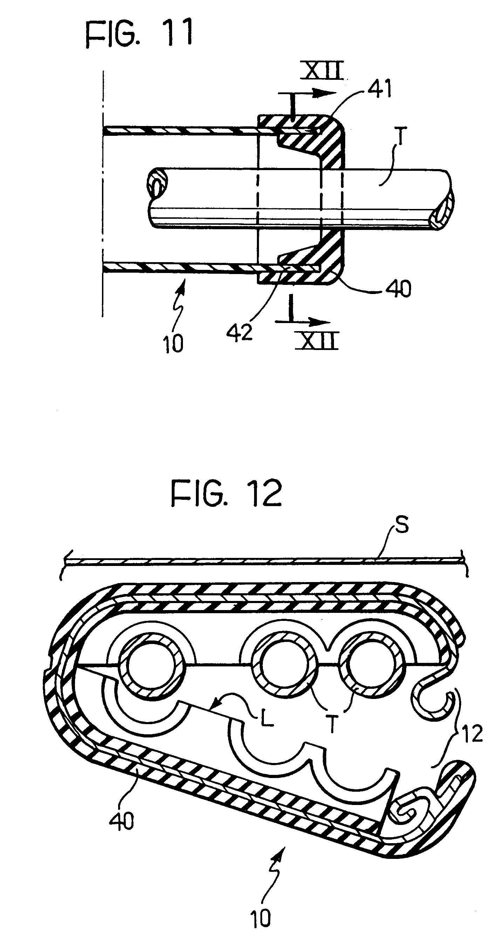

Figure 7 shows a different type of attachment for fixing the saddle support 16 to the body S. In this embodiment, the flanged portion 16c has an integral auxiliary flanged portion 24 and an integral deformable cylindrical end 26 which is adapted to be inserted in a hole H in the body S. The flanged portion 16c and the auxiliary integral flange 24 form parts of a bayonet coupling adapted to be inserted in a shaped aperture A₁ in the profiled section 10, as shown in Figure 9, and then rotated through 90°. By virtue of this rotation, the wall 10a of the profiled section 10 is interposed between the flanged portion 16c and the auxiliary integral flange 24, thus fixing the saddle support 16 to the profiled section 10. In order to prevent the cylindrical ends 26 from coming out of the holes H in the body S, metal pins 30 are inserted in central holes 19' in the saddle supports 16 and, by suitably expanding the ends 26, prevent them from accidentally coming out. After the profiled section 10 has been fixed to the body S, the pipes T can be inserted therein and the profiled section 10 then closed. Clearly, the variant shown in Figure 7 is particularly suitable for manual fitting, whilst the variant of Figures 4-5 is particularly suitable for automatic fitting.

The variant of Figure 8 shows a profiled section which is similar to that of Figure 7 but is suitable for the manual fitting of the closed profiled section complete with pipes T to the body. In this variant, the wall 10c of the profiled section 10 opposite the wall 10a for fixing to the body has holes 32 for the insertion of plug elements 34 having resilient snap-engagement flanges 34a for cooperating with corresponding engagement portions 36 integral with the saddle supports 16. The assembly of the profiled section 10, the saddle support 16 and the pipes T can thus be connected directly to the body S by the insertion of the cylindrical ends 26 in the appropriate holes H and the subsequent insertion of the locking pins 30 through the holes 32. As well as ensuring a perfect seal within the hollow profiled section 10, the plug elements 34 also help the longitudinal coupling 12 to keep the profiled section closed.

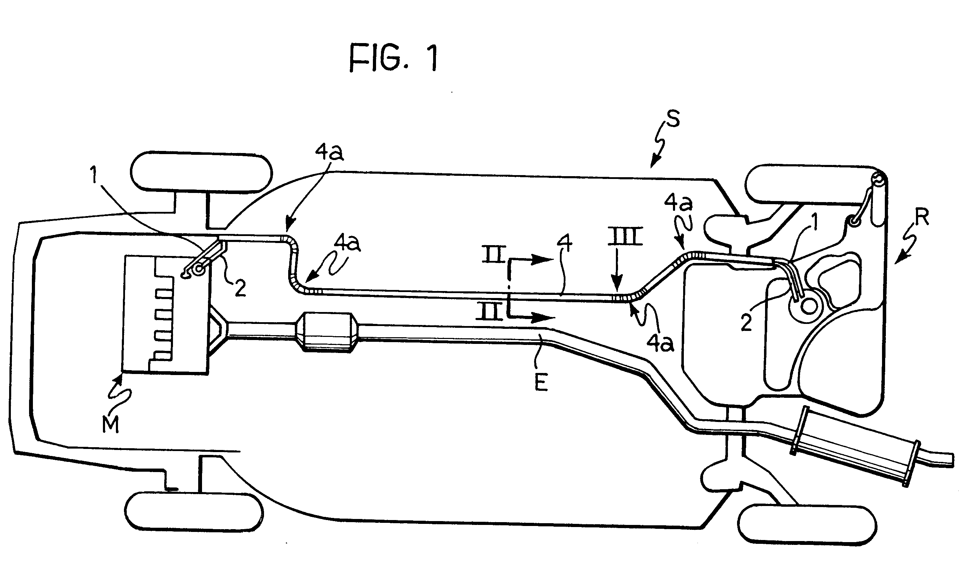

For this purpose, the hollow profiled section shown in Figure 1 may be modified as shown in Figure 10, in which the saddle support 16 includes a further portion 16d opposite the flanged portion 16c and engageable by the plug element 34. The complete closure of the openable profiled section 10 is thus ensured should the engagement system 12 not be wholly reliable.

The ends of the hollow profiled sections 10 at which the pipes T are connected to the respective units (tank, carburettor, etc.) have elastomeric sealing caps 40 which are fitted in ends 42 of the profiled section 10 at 41 and can be split along shaped separation lines L so as to house the pipes T in the same way as the articulated rigid elements of the tubular profiled sections 10.

## Claims

1. An assembly for supporting and housing pipes, electrical cables and the like of a motor-vehicle, intended to be mounted to the motor-vehicle body (S), characterised in that it comprises:
- a sheath (4, 10) of rigid material, including corrugated portions (4a) adapted to be bended during the installation of the assembly to the motor-vehicle body (S) for enabling the assembly to be shaped in order to fit the shape of the body (S), and
- means (5, A, A₁) to enable the connection of the sheath (4, 10) to the motor-vehicle body (S), disposed along the sheath (4, 10) and formed integrally with it.

2. An assembly according to Claim 1, characterised in that the sheath (4) has a lateral rib (5) with a dovetail-shaped cross-section for resilient snap-engagement in corresponding seats (6a, 6) provided on the motor vehicle body (S) outside the passenger compartment.

3. An assembly according to Claim 2, characterised in that the seats for the rib (5) are defined by metal elements (6) adapted to be welded electrically to the body and provided with converging tabs (6a) for engaging the rib (5).

4. An assembly according to Claim 1, characterised in that the sheath (10) has at least two half-shells (10a, 10c) which are articulated longitudinally and adapted to be joined together when closed.

5. An assembly according to Claim 4, characterised in that it also includes saddle elements (16) for supporting the pipes (T) within the sheath (10) and adapted to be fixed to the motor-vehicle body (S) through holes (A) in one (10a) of the half-shells, the support elements (16) also acting as supports for the sheath (10).

6. An assembly according to Claim 5, characterised in that each support element (16) has a first, shank portion (16a) adapted to be force-fitted on a pin (P) which is fixed to the body (S) and passes through a corresponding hole (A) in a half-shell (10a) of the sheath (10), and a second portion (16b) comprising a plurality of support saddles for pipes (T).

7. An assembly according to Claim 6, characterised in that a wall of one half-shell (10a) of the sheath (10) is clamped between the shank portion (16a) of the support element (16) and an intermediate element (22) disposed between the body (S) and the half-shell (10a) and resiliently snap-engaged on the support element (16).

8. An assembly according to Claim 6, characterised in that the shank portion (16a) of the support element (16) has an enlarged fixing head (16c, 24) which is adapted to be fitted in a shaped aperture (A1) in a half-shell (10a) by means of a bayonet coupling, and which has a pair of flanges (16c, 24) between which the wall of the half-shell (10a) is interposed and a deformable cylindrical end (26) which is adapted to be inserted in a hole (H) in the body (S) and fixed thereto.

9. An assembly according to any one of Claims 5 to 8, characterised in that the opposite side of each support element (16) from that which is fixed to the body (S) has an engagement portion (36, 16d) for cooperating with a corresponding retaining portion (34a) associated with a half-shell (10c) opposite that (10a) which is fixed to the body (S).

10. An assembly according to Claim 9, characterised in that each retaining portion (34a) is formed in a plug element (34) inserted in a corresponding auxiliary hole (32) formed in the half-shell (10c) opposite that (10a) which is fixed to the body (S).

11. An assembly according to any one of the preceding claims, characterised in that at least one end (42) of the sheath (10) has an elastomeric seal (40) interposed between the sheath (10) and the pipes (T).

12. An assembly according to Claim 11, characterised in that the seal (40) comprises two elements articulated to each other and adapted to be closed together when the two half-shells (10a, 10c) are closed.

## Patentansprüche

1. Anordnung zum Tragen und Aufnehmen von Rohrleitungen, elektrischen Kabeln und dergleichen eines Kraftfahrzeuges, die zum Befestigen an einer Kraftfahrzeugkarosserie (S) bestimmt ist,
**gekennzeichnet dadurch,** daß sie umfaßt:
- einen Mantel (4, 10) aus steifem Material einschließlich gewellter Abschnitte (4a), die zum Biegen während des Einbaus der Anordnung an der Kraftfahrzeugkarosserie (S) ausgebildet sind, um das Formen der Anordnung zum Anpassen an die Form der Karosserie zu ermöglichen, und
- ein entlang des Mantels (4, 10) angeordnetes und an ihm angeformtes integrales Mittel (5, A, A₁) zum Ermöglichen der Verbindung des Mantels (4, 10) mit der Kraftfahrzeugkarosserie (S).

2. Anordnung nach Anspruch 1,
**dadurch gekennzeichnet,** daß der Mantel (4) einen seitlichen Steg (5) mit einem schwalbenschwanzförmigen Querschnitt zum elastischen Einschnappen in entsprechenden, an der Kraftfahrzeugkarosserie (S) außerhalb des Fahrgastraumes vorgesehenen Aufnahmen (6a, 6) besitzt.

3. Anordnung nach Anspruch 2,
**dadurch gekennzeichnet,** daß die Aufnahmen für den Steg (5) durch Metallelemente (6) umgrenzt sind, die zum elektrischen Anschweißen an der Karosserie angepaßt und mit konvergierenden Vorsprüngen (6a) zum Ineinandergreifen mit dem Steg (5) versehen sind.

4. Anordnung nach Anspruch 1,
**dadurch gekennzeichnet**, daß der Mantel (10) mindestens zwei Halbschalen (10a, 10c) besitzt, die in Längsrichtung aneinandergefügt und angepaßt sind, um miteinander verbunden zu werden, wenn sie geschlossen sind.

5. Anordnung nach Anspruch 4,
**dadurch gekennzeichnet,** daß er auch Sattelelemente (16) zum Auflagern der Leitungen (T) in dem Mantel (10) umfaßt und angepaßt ist, um durch Bohrungen (A) in einer (10a) der Halbschalen an der Kraftfahrzeugkarosserie (S) befestigt zu werden, wobei die Auflageelemente (16) auch als Auflagen fur den Mantel (10) dienen.

6. Anordnung nach Anspruch 5,
**dadurch gekennzeichnet,** daß jedes Auflageelement (16) ein erstes Schaftteil (16a), das angepaßt ist, um durch Preßpassung auf einem an der Karosserie (S) befestigten und durch eine entsprechende Bohrung (A) in einer Halbschale (10a) des Mantels (10) führenden Stift (P) aufgesetzt zu werden, sowie ein zweites Teil (16b) einschließlich einer Vielzahl von Auflagesatteln für die Rohre (T) besitzt.

7. Anordnung nach Anspruch 6,
**dadurch gekennzeichnet,** daß eine Wand einer Halbschale (10a) des Mantels (10) zwischen dem Schaftteil (16a) des Auflageelementes (16) und einem zwischen der Karosserie (S) und der Halbschale (10a) angeordneten und durch eine elastische Schnappverbindung an dem Auflageelement (16) befestigten Zwischenelement (22) eingespannt ist.

8. Anordnung nach Anspruch 6,
**dadurch gekennzeichnet,** daß das Schaftteil (16a) des Auflageelementes (16) ein vergrößertes Befestigungskopfteil (16c, 24) besitzt, das angepaßt ist, um mittels einer Bajonettverbindung in einer geformten Öffnung (Al) in einer Halbschale (10a) eingepaßt zu werden und das ein Paar Flansche (16c, 24), zwischen dem die Wand der Halbschale (10a) eingesetzt ist, und ein verformbares Ende (26) besitzt, das angepaßt ist, um in eine Bohrung (H) in der Karosserie (S) eingesetzt und darin befestigt zu werden.

9. Anordnung nach einem der Ansprüche 5 bis 8,
**dadurch gekennzeichnet**, daß die der an der Karosserie (S) befestigten Seite gegenüberliegende Seite jedes Auflageelementes (16) ein Eingriffteil (36, 16d) besitzt, um mit einem entsprechenden Aufnahmeteil (34a) zusammenzuwirken, das mit einer Halbschale (10c) verbunden ist, die gegenüber der an der Karosserie (S) befestigten (10a) liegt.

10. Anordnung nach Anspruch 9,
**dadurch gekennzeichnet,** daß jedes Aufnahmeteil (34a) in einem Steckelement (34) ausgebildet ist, das in einer entsprechende Zusatzbohrung (32) eingesetzt ist, die in der Halbschale (10c) ausgebildet ist, die der an der Karosserie (S) befestigten Halbschale (10a) gegenüberliegt.

11. Anordnung nach einem der vorhergehenden Ansprüche,
**dadurch gekennzeichnet,** daß mindestens ein Ende (42) des Mantels (10) eine Elastomerdichtung (40) besitzt, die zwischen dem Mantel (10) und den Leitungen (T) angeordnet ist.

12. Anordnung nach Anspruch 11,
**dadurch gekennzeichnet,** daß die Dichtung (40) zwei aneinandergefügte Elemente besitzt, die angepaßt sind, um zusammengefügt zu werden, wenn die Halbschalen (10a, 10c) geschlossen sind.

## Revendications

1. Ensemble pour supporter et recevoir des tuyauteries, des câbles électriques et similaires d'un véhicule à moteur, prévu pour être fixé à la carrosserie (S) du véhicule à moteur, caractérisé en ce qu'il comprend:
- une enveloppe (4, 10) d'un matériau rigide, comprenant des parties ondulées (4a) adaptées pour être recourbées pendant l'installation de l'ensemble sur la carrosserie (S) d'un véhicule à moteur, pour permettre de mettre en forme l'ensemble afin de s'adapter à la forme de la carrosserie (S), et
- des moyens (5, A, A1) pour permettre le raccordement de l'enveloppe (4, 10) à la carrosserie (S) du véhicule à moteur, placésle long de l'enveloppe (4, 10) et formés d'un seul tenant avec cette dernière.

2. Ensemble selon la revendication 1, caractérisé en ce que l'enveloppe (4) présente une nervure latérale (5) avec une section en forme de queue d'aronde pour être mise en prise par enclenchement élastique avec les sièges correspondants (6a, 6) prévus sur la carrosserie du véhicule à moteur (S) à l'extérieur de l'habitacle.

3. Ensemble selon la revendication 2, caractérisé en ce que les sièges prévus pour la nervure (5) sont définis par des éléments métalliques (6) adaptés pour être soudés électriquement à la carrosserie et sont pourvus de pattes convergentes (6a) prévues pour se mettre en prise avec la nervure (5).

4. Ensemble selon la revendication 1, caractérisé en ce que l'enveloppe (10) comporte au moins deux demi-coques (10a, 10c) qui sont articulées dans le sens longitudinal et adaptées pour être reliées ensemble une fois fermées.

5. Ensemble selon la revendication 4, caractérisé en ce qu'il comprend également des éléments formant pattes de fixation (16) pour supporter les tuyauteries (T) à l'intérieur de l'enveloppe (10) et adaptés pour être fixés à la carrosserie (S) du véhicule à moteur par l'intermédiaire de trous (A) ménagés dans une (10a) des demi-coques, les éléments formants supports (16) agissant également comme supports pour l'enveloppe (10).

6. Ensemble selon la revendication 5, caractérisé en ce que chaque élément formant support (16) comporte une première partie formant tige (16a) adaptée pour être insérée en force sur une tige (P) qui est fixée à la carrosserie (S) et passe à travers un trou correspondant (A) dans une demi-coque (10a) de l'enveloppe (10) et une deuxième partie (16b) comprenant une pluralité de pattes de fixation formant supports pour les tuyauteries (T).

7. Ensemble selon la revendication 6, caractérisé en ce qu'une paroi d'une demi-coque (10a) de l'enveloppe (10) est serrée entre la partie formant tige (16a) de l'élément formant support (16) et un élément intermédiaire (22) placé entre la carrosserie (S) et la demi-coque (10a) et mis en prise par enclenchement élastique sur l'élément formant support (16).

8. Ensemble selon la revendication 6, caractérisé en ce que la partie formant tige (16a) de l'élément formant support (16) comporte une tête de fixation agrandie (16c, 24) qui est adaptée pour être fixée dans une ouverture en forme (A1) ménagée dans une demi-coque (10a) au moyen d'un accouplement à baïonnette, et qui présente une paire de brides (16c, 24) entre lesquelles la paroi de la demi-coque (10a) est placée et une extrémité cylindrique déformable (26) qui est adaptée pour être insérée dans un trou (H) dans la carrosserie (S) et fixée à cette dernière.

9. Ensemble selon l'une quelconque des revendications 5 à 8, caractérisé en ce que le côté de chaque élément formant support (16) opposé au côté fixé à la carrosserie (S) présente une partie de mise en prise (36, 16d) pour coopérer avec une partie de retenue coopérante (34a) associée à une demi-coque (10c) opposée à celle (10a) qui est fixée à la carrosserie (S).

10. Ensemble selon la revendication 9, caractérisé en ce que chaque partie de retenue (34a) est formée dans un élément formant goujon (34) inséré dans un trou auxiliaire correspondant (32) formé dans la demi-coque (10c) opposée à celle (10a) qui est fixée à la carrosserie (S).

11. Ensemble, selon l'une quelconque des revendications précédentes, caractérisé en ce qu'au moins une extrémité (42) de l'enveloppe (10) comporte une étanchéité en élastomère (40) placée entre l'enveloppe (10) et les tuyauteries (T).

12. Ensemble selon la revendication 11, caractérisé en ce que l'étanchéité (40) comprend deux éléments articulés l'un à l'autre et adaptés pour être fermés ensemble lorsque les deux demi-coques (10a, 10c) sont fermées.
